(19) 

(11) **EP 4 418 340 B1**

(12) **EUROPEAN PATENT SPECIFICATION**

(45) Date of publication and mention of the grant of the patent: **23.09.2026 Bulletin 2026/39**

(21) Application number: **22896052.2**

(22) Date of filing: **16.11.2022**

(51) International Patent Classification (IPC):
***H01M 4/131** (2010.01)* ***H01M 4/133** (2010.01)*
***H01M 4/36** (2006.01)* ***H01M 4/48** (2010.01)*
***H01M 4/587** (2010.01)* ***H01M 4/62** (2006.01)*
***H01M 10/052** (2010.01)* ***H01M 4/525** (2010.01)*
***H01M 4/02** (2006.01)*

(52) Cooperative Patent Classification (CPC):
**H01M 4/587; H01M 4/131; H01M 4/133; H01M 4/364; H01M 4/483; H01M 4/525; H01M 4/622; H01M 4/623; H01M 10/0525;** H01M 2004/027; H01M 2004/028; Y02E 60/10

(86) International application number: **PCT/KR2022/018080**

(87) International publication number: **WO 2023/090847 (25.05.2023 Gazette 2023/21)**

(54) **NEGATIVE ELECTRODE AND SECONDARY BATTERY INCLUDING THE SAME**

NEGATIVE ELEKTRODE UND SEKUNDÄRBATTERY DAMIT

ÉLECTRODE NEGATIVE ET BATTERIE SECONDAIRE LA COMPRENANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **16.11.2021 KR 20210157520**

(43) Date of publication of application: **21.08.2024 Bulletin 2024/34**

(73) Proprietor: **LG Energy Solution, Ltd.**
**Seoul 07335 (KR)**

(72) Inventors:
- **KIM, Ye Lin**
  **Daejeon (KR)**
- **JO, Mi Ru**
  **Daejeon (KR)**
- **PARK, Sung Bin**
  **Daejeon (KR)**
- **JOENG, Seung Hwan**
  **Daejeon (KR)**

(74) Representative: **Hoffmann Eitle**
**Patent- und Rechtsanwälte PartmbB**
**Arabellastraße 30**
**81925 München (DE)**

(56) References cited:
**EP-A1- 3 905 390** **CN-A- 111 628 141**
**JP-A- 2017 059 538** **KR-A- 20050 087 148**
**KR-A- 20050 087 148** **KR-A- 20190 106 735**
**KR-A- 20200 023 240** **KR-A- 20210 096 814**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### TECHNICAL FIELD

Cross-reference to Related Applications

This application claims priority from Korean Patent Application No. 10-2021-0157520, filed on November 16, 2021.

Technical Field

The present invention relates to a negative electrode and a secondary battery including the same.

### BACKGROUND ART

Recently, with the rapid spread of electronic devices using batteries, such as mobile phones, notebook computers, and electric vehicles, demand for secondary batteries with relatively high capacity as well as small size and lightweight has been rapidly increased. Particularly, since a lithium secondary battery is lightweight and has high energy density, the lithium secondary battery is in the spotlight as a driving power source for portable devices. Accordingly, research and development efforts for improving the performance of the lithium secondary battery have been actively conducted.

In general, a lithium secondary battery includes a positive electrode, a negative electrode, a separator disposed between the positive electrode and the negative electrode, an electrolyte, and an organic solvent. Also, an active material layer including a positive electrode active material or a negative electrode active material may be formed on a current collector in the positive electrode and the negative electrode. A lithium-containing metal oxide, such as $LiCoO_2$ or $LiMn_2O_4$, is generally used as the positive electrode active material in the positive electrode, and, accordingly, a silicon-based active material or carbon-based active material not containing lithium is used as the negative electrode active material in the negative electrode.

Particularly, the silicon-based active material among the negative electrode active materials has received attention in that it has capacity about 10 times higher than that of the carbon-based active material and is advantageous in that it may achieve high energy density even with a thin electrode. However, the silicon-based active material is not universally used due to problems such as a volume expansion due to charge and discharge, resulting cracking/damage of active material particles, and resulting degradation of life characteristics.

Also, in a case in which the silicon-based active material is used at a high voltage, since problems, such as the volume expansion due to charge and discharge, a decrease in structural stability of the negative electrode, excessive formation of a solid electrolyte interface layer (SEI layer), and electrolyte solution depletion, are intensified, it has been limitedly used in automotive batteries having a lower operating voltage range than portable electronic devices.

Thus, with respect to a negative electrode and a secondary battery which use the silicon-based active material, there is a need to develop a negative electrode and a secondary battery which have high energy density and high life characteristics during high-voltage use.

Korean Patent Application Laid-open Publication No. 10-2017-0074030 relates to a negative electrode active material for a lithium secondary battery, a preparation method thereof, and a lithium secondary battery including the same, and discloses a negative electrode active material including a porous silicon-carbon composite, but has a limitation in solving the above-described problems.

KR 10-2005-0087148 describes negative active material for lithium secondary batteries.

CN 111628141 A discloses negative electrode plates and lithium ion batteries comprising the same.

[Prior Art Document]

[Patent Document]

Korean Patent Application Laid-open Publication No. 10-2017-0074030;
CN 111628141 A;
KR 10-2005-0087148

### DISCLOSURE OF THE INVENTION

## TECHNICAL PROBLEM

An aspect of the present invention provides a negative electrode in which life performance of a battery, particularly, life performance when used in a high voltage range may be significantly improved by preventing degradation due to nonuniformity of components in the negative electrode.

Another aspect of the present invention provides a secondary battery including the above-described negative electrode.

## TECHNICAL SOLUTION

According to an aspect of the present invention as claimed in claim 1, there is provided a negative electrode including a negative electrode current collector; a first negative electrode active material layer disposed on the negative electrode current collector and including a first carbon-based active material, a first silicon-based active material, and a first binder; and a second negative electrode active material layer disposed on the first negative electrode active material layer and including a second carbon-based active material, a second silicon-based active material, and a second binder, wherein the first silicon-based active material includes a first silicon-based compound represented by $SiO_x$ ($0 \leq x < 2$) and a first metal doped in the first silicon-based compound, and the second silicon-based active material includes a second silicon-based compound represented by $SiO_y$ ($0 \leq y < 2$) and a second metal doped in the second silicon-based compound, wherein a weight ratio of the first metal based on a total weight of the first silicon-based compound and the first metal is greater than a weight ratio of the second metal based on a total weight of the second silicon-based compound and the second metal, and a ratio of a weight percentage of the first binder based on a weight of the first negative electrode active material layer to a weight percentage of the second binder based on a weight of the second negative electrode active material layer is in a range of 0.9:1 to 5.5:1. Further details of the invention are defined in the independent claim.

According to another aspect of the present invention as claimed in claim 11, there is provided a secondary battery including the above-described negative electrode; a positive electrode facing the negative electrode; a separator disposed between the negative electrode and the positive electrode; and an electrolyte.

## ADVANTAGEOUS EFFECTS

A negative electrode of the present invention is characterized in that, in a sequentially stacked structure of a negative electrode current collector; a first negative electrode active material layer; and a second negative electrode active material layer, a metal doping ratio of a first silicon-based active material included in the first negative electrode active material layer is greater than a metal doping ratio included in the second negative electrode active material layer, and a ratio of a weight ratio of a first binder included in the first negative electrode active material layer to a weight ratio of a second binder included in the second negative electrode active material layer is adjusted within a specific range. According to the negative electrode of the present invention, since uniform lithium intercalation/deintercalation may be achieved in the entire negative electrode as the first silicon-based active material and the second silicon-based active material, which have different metal doping ratios from each other, are disposed in the first negative electrode active material layer and the second negative electrode active material layer, respectively, a degree of thickness expansion of the negative electrode may be significantly reduced. Also, according to the negative electrode of the present invention, since uneven distribution of the binder in the entire negative electrode is prevented as the weight ratio of the first binder to the second binder is adjusted, binding or adhesion between the current collector and the first negative electrode active material layer and between the first negative electrode active material layer and the second negative electrode active material layer may be improved, and thus, overall adhesion of the negative electrode including the silicon-based active material may be improved and the degree of thickness expansion of the negative electrode may be significantly reduced to significantly improve life performance of the negative electrode and a secondary battery including the negative electrode. Particularly, the negative electrode of the present invention may exhibit an excellent life performance improvement in high-voltage use or a high-loading negative electrode.

## BRIEF DESCRIPTION OF THE DRAWINGS

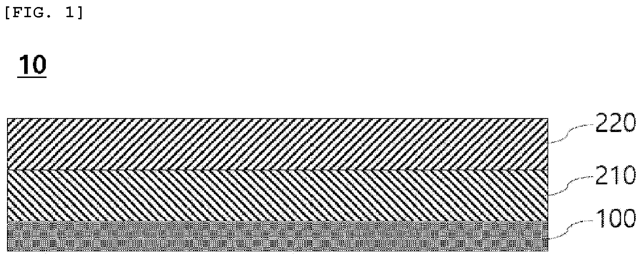

FIG. 1 is a schematic side view for explaining a negative electrode according to the present invention.

## MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea

of the invention, based on the principle that an inventor may properly define the meaning of the words or terms to best explain the invention.

The terminology used herein is for the purpose of describing particular example embodiments only and is not intended to be limiting of the present invention. In the specification, the terms of a singular form may include plural forms unless referred to the contrary.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

In the present specification, an average particle diameter ($D_{50}$) may be defined as a particle diameter at a cumulative volume of 50% in a particle size distribution curve. The average particle diameter ($D_{50}$), for example, may be measured by using a laser diffraction method. The laser diffraction method may generally measure a particle diameter ranging from submicrons to a few mm and may obtain highly repeatable and high-resolution results.

Hereinafter, the present invention will be described in detail with reference to the drawing. Specifically, FIG. 1 is a schematic side view for explaining a negative electrode according to the present invention.

**<Negative Electrode>**

The present invention relates to a negative electrode, specifically, a negative electrode for a lithium secondary battery.

Referring to Figure 1, a negative electrode 10 of the present invention includes a negative electrode current collector 100; a first negative electrode active material layer 210 disposed on the negative electrode current collector 100 and including a first carbon-based active material, a first silicon-based active material, and a first binder; and a second negative electrode active material layer 220 disposed on the first negative electrode active material layer 210 and including a second carbon-based active material, a second silicon-based active material, and a second binder, wherein the first silicon-based active material includes a first silicon-based compound represented by $SiO_x$ ($0 \leq x < 2$) and a first metal doped in the first silicon-based compound, and the second silicon-based active material includes a second silicon-based compound represented by $SiO_y$ ($0 \leq y < 2$) and a second metal doped in the second silicon-based compound, wherein a weight ratio of the first metal based on a total weight of the first silicon-based compound and the first metal is greater than a weight ratio of the second metal based on a total weight of the second silicon-based compound and the second metal, and a ratio of a weight percentage of the first binder based on a weight of the first negative electrode active material layer 210 to a weight percentage of the second binder based on a weight of the second negative electrode active material layer 220 is in a range of 0.9:1 to 5.5:1.

Conventionally, a silicon-based active material has an advantage of having higher capacity than a carbon-based active material, but is not universally used because a degree of volume expansion and contraction caused by intercalation and deintercalation of lithium is large. Such a problem is further intensified when a negative electrode is highly loaded or a negative electrode is used in a high voltage range.

In order to solve this problem, the negative electrode of the present invention is characterized in that, in a sequentially stacked structure of a negative electrode current collector; a first negative electrode active material layer; and a second negative electrode active material layer, a metal doping ratio of a first silicon-based active material included in the first negative electrode active material layer is greater than a metal doping ratio included in the second negative electrode active material layer, and a ratio of a weight ratio of a first binder included in the first negative electrode active material layer to a weight ratio of a second binder included in the second negative electrode active material layer is adjusted within a specific range. According to the negative electrode of the present invention, since uniform lithium intercalation/deintercalation may be achieved in the entire negative electrode as the first silicon-based active material and the second silicon-based active material, which have different metal doping ratios from each other, are disposed in the first negative electrode active material layer and the second negative electrode active material layer, respectively, a degree of thickness expansion of the negative electrode may be significantly reduced. Also, according to the negative electrode of the present invention, since uneven distribution of the binder in the entire negative electrode is prevented as the weight ratio of the first binder to the second binder is adjusted, binding or adhesion between the current collector and the first negative electrode active material layer and between the first negative electrode active material layer and the second negative electrode active material layer may be improved, and thus, overall adhesion of the negative electrode including the silicon-based active material may be improved and the degree of thickness expansion of the negative electrode may be significantly reduced to significantly improve life performance of the negative electrode and a secondary battery including the negative electrode. Accordingly, the negative electrode of the present invention may exhibit excellent life performance in high-voltage use or a high-loading negative electrode.

## Negative Electrode current collector 100

The negative electrode current collector 100 is not particularly limited as long as it has high conductivity without causing adverse chemical changes in the battery. Specifically, the negative electrode current collector 100 may include at least one selected from the group consisting of copper, stainless steel, aluminum, nickel, titanium, fired carbon, and an aluminum-cadmium alloy, and may specifically include copper.

The negative electrode current collector 100 may typically have a thickness of 3 $\mu$m to 500 $\mu$m.

Microscopic irregularities may be formed on a surface of the negative electrode current collector 100 to improve adhesion of the negative electrode active material. For example, the negative electrode current collector may be used in various shapes such as that of a film, a sheet, a foil, a net, a porous body, a foam body, a non-woven fabric body, and the like.

## First Negative Electrode Active Material Layer 210

The first negative electrode active material layer 210 is disposed on the negative electrode current collector 100. The first negative electrode active material layer may be specifically disposed on at least one surface of the negative electrode current collector, and may be more specifically disposed on one surface or both surfaces of the negative electrode current collector.

The first negative electrode active material layer 210 includes a first carbon-based active material, a first silicon-based active material, and a first binder.

The first carbon-based active material may include at least one selected from the group consisting of artificial graphite, natural graphite, hard carbon, soft carbon, carbon black, graphene, and fibrous carbon, and may specifically include at least one selected from the group consisting of artificial graphite and natural graphite.

An average particle diameter ($D_{50}$) of the first carbon-based active material may be in a range of 5 $\mu$m to 35 $\mu$m, preferably, 10 $\mu$m to 20 $\mu$m in terms of ensuring structural stability during charge and discharge and reducing a side reaction with an electrolyte solution.

The first carbon-based active material may be included in an amount of 65 wt% to 98 wt%, specifically, 80 wt% to 95 wt% in the first negative electrode active material layer 210.

The first silicon-based active material includes a first silicon-based compound represented by $SiO_x$ ($0 \leq x < 2$) and a first metal doped in the first silicon-based compound.

In general, with respect to a silicon-based active material, there is a problem in that an irreversible reaction, in which some of lithium moved to a negative electrode during initial charge do not return to a positive electrode during discharge, is caused by the presence of an irreversible site in the silicon-based active material. In order to prevent this problem, the first metal may be introduced to reduce an irreversible phase of the first silicon-based compound and improve efficiency by being doped into the first silicon-based compound. As will be described later, a weight ratio of the first metal based on a total weight of the first silicon-based compound and the first metal is greater than a weight ratio of the second metal based on a total weight of the second silicon-based compound and the second metal. Through this, since initial efficiency of the silicon-based active material present in a lower layer portion of the negative electrode may be increased and a phenomenon, in which a severe overvoltage is applied to an upper layer portion of the negative electrode close to a separator during a charging process of the negative electrode, may be mitigated, lithium intercalation/deintercalation may occur evenly without uneven distribution in an upper portion of the negative electrode, and thus, a degree of volume expansion of the negative electrode due to charge and discharge may be reduced to a significant level and, accordingly, the life performance of the negative electrode and the secondary battery including the negative electrode may be improved.

The first silicon-based compound is represented by the formula of $SiO_x$ ($0 \leq x < 2$), and may be specifically represented by the formula of $SiO_x$ ($0 < x < 2$). Since $SiO_2$ (when x=2 in Formula 1) does not react with lithium ions, it may not store lithium, and thus, it is desirable that x is within the above range. Specifically, the first silicon-based compound may be represented by the formula of $SiO_x$ ($0.5 \leq x \leq 1.5$).

The first metal is doped into the first silicon-based compound. Specifically, the first metal may be located inside, on a surface, or inside and on the surface of the first silicon-based compound by being doped into the first silicon-based compound. The first metal may be doped into the first silicon-based compound to form a metal silicate with a silicon oxide included in the first silicon-based compound.

The first metal includes at least one metal selected from the group consisting of lithium (Li), magnesium (Mg), calcium (Ca), and aluminum (Al). Specifically, the first metal may include at least one selected from the group consisting of Li and Mg, more specifically, Mg in terms of the fact that volume expansion control of silicon-based oxide particles, damage prevention, and an effect of improving initial efficiency may be achieved at an excellent level.

A weight of the first metal is in a range of 10 wt% to 25 wt%, specifically, 10 wt% to 16 wt% based on the total weight of the first silicon-based compound and the first metal. When the weight of the first metal is within the above range, since the

intercalation and deintercalation of lithium may smoothly occur in relation to the second silicon-based active material, charging performance of the entire negative electrode may be improved and the intercalation and deintercalation of lithium may occur evenly throughout the negative electrode, and thus, the degree of thickness expansion of the negative electrode may be reduced and a reduction in capacity due to excessive metal doping may be prevented. The amount of the first metal may be measured using an ICP-AES (inductively coupled plasma atomic emission spectrometer).

The first silicon-based active material may further include a carbon coating layer that is disposed on a surface thereof. The carbon coating layer may function as a protective layer that suppresses volume expansion of the first silicon-based active material and prevents the side reaction with the electrolyte solution.

The carbon coating layer may be included in an amount of 0.1 wt% to 10 wt%, preferably, 3 wt% to 7 wt% in the first silicon-based active material, and, when the amount of the carbon coating layer is within the above range, it is desirable in terms of the fact that the coating layer may prevent the side reaction with the electrolyte solution while controlling the volume expansion of the first silicon-based active material to an excellent level.

The carbon coating layer may be an amorphous carbon coating layer. Specifically, the carbon coating layer may be formed by chemical vapor deposition (CVD) using at least one hydrocarbon gas which is selected from the group consisting of methane, ethane, and acetylene.

An average particle diameter ($D_{50}$) of the first silicon-based active material may be in a range of 1 $\mu$m to 15 $\mu$m, more preferably, 2 $\mu$m to 8 $\mu$m in terms of ensuring structural stability of the active material during charge and discharge, preventing a problem in which a volume expansion/contraction level is increased as the particle diameter is excessively increased, and preventing a problem in which the initial efficiency is reduced due to the excessively small particle diameter.

The first silicon-based active material may be included in an amount of 1 wt% to 20 wt%, specifically, 3 wt% to 15 wt% in the first negative electrode active material layer 210 in order to secure sufficient capacity of the negative electrode while reducing an effect on the volume expansion of the first silicon-based active material.

A method of preparing the first silicon-based active material is not particularly limited. Specifically, the first silicon-based active material may be prepared by a method including: (a) vaporizing a compound represented by $SiO_a$ ($0 \leq a < 2$) to generate a first vapor; vaporizing a first metal to generate a second vapor; mixing the first vapor and the second vapor to perform a gas-phase reaction; and obtaining powder by cooling after the gas-phase reaction. During the preparation of the first silicon-based active material, a process of forming the carbon coating layer and a process of adjusting the average particle diameter ($D_{50}$), which are well known in the art, may be added.

The first carbon-based active material and the first silicon-based active material may be included in an amount of 90 wt% to 98 wt%, specifically, 94 wt% to 98 wt% in the first negative electrode active material layer. Also, a weight ratio of the first carbon-based active material to the first silicon-based active material may be in a range of 83:17 to 99:1, specifically, 88:12 to 93:7. When the weight ratio is within the above range, sufficient capacity of the negative electrode may be secured and a high-loading negative electrode may be achieved while the effect on the volume expansion of the silicon-based active material is reduced.

The first binder is included in the first negative electrode active material layer 210 for binding between the negative electrode current collector 100 and the first negative electrode active material layer 210 and binding between the negative electrode active materials (the first carbon-based active material and the first silicon-based active material).

In terms of further improving electrode adhesion and providing sufficient resistance to volume expansion/contraction of the active material, the first binder may include at least one selected from the group consisting of polyvinylidene fluoride (PVdF), styrene butadiene rubber (SBR), acrylonitrile butadiene rubber, acrylic rubber, butyl rubber, fluoro rubber, polyvinyl alcohol, carboxymethyl cellulose (CMC), starch, hydroxypropyl cellulose, regenerated cellulose, polyvinyl alcohol (PVA), polyacrylic acid (PAA), polyethylene glycol (PEG), polyacrylonitrile (PAN), and polyacrylamide (PAM), and may specifically include a styrene butadiene rubber (SBR).

The first binder may be included in an amount of 1 wt% to 15 wt%, particularly 2 wt% to 8 wt%, and more particularly 3.5 wt% to 4.5 wt% in the first negative electrode active material layer 210. However, the amount of the first binder needs to be adjusted in consideration of a relationship of the ratio of the weight ratio of the first binder to the weight ratio of the second binder which will be described later.

The first negative electrode active material layer 210 may further include a first conductive material together with the first carbon-based active material, the first silicon-based active material, and the first binder.

The first conductive material may be used to improve conductivity of the first negative electrode active material layer, and it is preferable that the first conductive material has conductivity without causing chemical changes. Specifically, the first conductive material may be at least one selected from the group consisting of natural graphite, artificial graphite, carbon black, acetylene black, Ketjen black, channel black, furnace black, lamp black, thermal black, conductive fibers, Single-Wall Carbon Nanotubes (SWCNT), Multi-Wall Carbon Nanotubes (MWCNT), fluorocarbon, aluminum powder, nickel powder, zinc oxide, potassium titanate, titanium oxide, and polyphenylene derivatives, may preferably include at least one selected from single-walled carbon nanotubes and multi-walled carbon nanotubes in consideration of maintenance of a conductive network of the first silicon-based active material, and may more specifically include single-walled carbon nanotubes.

The first conductive material may be included in an amount of 0.001 wt% to 10 wt%, specifically, 0.01 wt% to 1 wt% in the first negative electrode active material layer 210, and, when the amount of the first conductive material is within the above range, it is preferable in terms of eliminating the overvoltage during charge while improving electrical conductivity of the surface of the first silicon-based active material, and preventing disconnection of the conductive network due to the volume expansion and contraction of the first silicon-based active material.

The first negative electrode active material layer 210 may further include a thickener. The thickener may include carboxymethylcellulose (CMC).

The thickener may be included in an amount of 0.5 wt% to 5 wt% in the first negative electrode active material layer 210, but is not limited thereto.

The first negative electrode active material layer 210 may have a thickness of 10 μm to 100 μm, specifically, 15 μm to 45 μm, and, according to the present invention, since the first negative electrode active material layer 210 may have excellent adhesion and thickness expansion control performance even if the first negative electrode active material layer 210 has a thickness within the above range, the life performance may be improved to an excellent level.

The first negative electrode active material layer 210 may have a loading amount of 1 $mAh/cm^2$ to 5 $mAh/cm^2$, specifically, 2 $mAh/cm^2$ to 4 $mAh/cm^2$, and, according to the present invention, since the first negative electrode active material layer 210 may have excellent adhesion and thickness expansion control performance even if the first negative electrode active material layer 210 has a loading amount within the above range, the life performance may be improved to an excellent level.

## Second Negative Electrode Active Material Layer 220

The second negative electrode active material layer 220 is disposed on the first negative electrode active material layer 210. If, in a case in which the first negative electrode active material layer is disposed on one surface or both surfaces of the negative electrode current collector, the second negative electrode active material layer, accordingly, is also disposed on the first negative electrode active material layer which is disposed on the one surface or both surfaces of the negative electrode current collector.

The second negative electrode active material layer 220 includes a second carbon-based active material, a second silicon-based active material, and a second binder.

The second carbon-based active material may include at least one selected from the group consisting of artificial graphite, natural graphite, hard carbon, soft carbon, carbon black, graphene, and fibrous carbon, and may specifically include at least one selected from the group consisting of artificial graphite and natural graphite.

An average particle diameter ($D_{50}$) of the second carbon-based active material may be in a range of 5 μm to 35 μm, preferably, 10 μm to 20 μm in terms of ensuring the structural stability during charge and discharge and reducing the side reaction with the electrolyte solution.

The second carbon-based active material may be included in an amount of 65 wt% to 98 wt%, specifically, 80 wt% to 95 wt% in the second negative electrode active material layer 220.

The second silicon-based active material includes a second silicon-based compound represented by $SiO_y$ ($0 \leq y < 2$) and a second metal doped in the second silicon-based compound. The second metal may be introduced to reduce an irreversible phase of the second silicon-based compound and improve efficiency by being doped into the second silicon-based compound.

According to the negative electrode of the present invention, the weight ratio of the first metal based on the total weight of the first silicon-based compound and the first metal is greater than the weight ratio of the second metal based on the total weight of the second silicon-based compound and the second metal, and, through this, since concentration of the intercalation and deintercalation of lithium on the upper portion (portion in contact with the separator) of the negative electrode may be prevented and the intercalation and deintercalation of lithium may occur evenly throughout the negative electrode, the thickness expansion of the negative electrode may be prevented. If, in a case in which the weight ratio of the first metal based on the total weight of the first silicon-based compound and the first metal is equal to or less than the weight ratio of the second metal based on the total weight of the second silicon-based compound and the second metal, since the intercalation/deintercalation of lithium may be concentrated on the upper portion of the negative electrode or the intercalation/deintercalation of lithium may not occur evenly throughout the negative electrode, charge and discharge performance of the negative electrode may be degraded and the degree of volume expansion of the negative electrode may be increased to rapidly reduce the life performance.

The second silicon-based compound is represented by the formula of $SiO_y$ ($0 \leq y < 2$), and may be specifically represented by the formula of $SiO_y$ ($0 < y < 2$). More specifically, the second silicon-based compound may be represented by the formula of $SiO_y$ ($0.5 \leq y \leq 1.5$).

The second metal is doped into the second silicon-based compound. Specifically, the second metal may be located inside, on a surface, or inside and on the surface of the second silicon-based compound by being doped into the second silicon-based compound. The second metal may be doped into the second silicon-based compound to form a

metal silicate with a silicon oxide included in the second silicon-based compound.

The second metal includes at least one metal selected from the group consisting of Li, Mg, Ca, and Al. Specifically, the second metal may include at least one selected from the group consisting of Li and Mg, more specifically, Mg in terms of the fact that the volume expansion control of the silicon-based oxide particles, the damage prevention, and the effect of improving the initial efficiency may be achieved at an excellent level.

A weight of the second metal included is in a range of 3 wt% or more to less than 10 wt%, specifically, 6.5 wt% to 9.5 wt% based on the total weight of the second silicon-based compound and the second metal. When the weight of the second metal is within the above range, since the intercalation and deintercalation of lithium may occur evenly throughout the negative electrode, the degree of thickness expansion of the negative electrode may be reduced and the reduction in capacity due to the excessive metal doping may be prevented.

The second silicon-based active material may further include a carbon coating layer that is disposed on a surface thereof. The carbon coating layer may function as a protective layer that suppresses volume expansion of the second silicon-based active material and prevents the side reaction with the electrolyte solution.

The carbon coating layer may be included in an amount of 0.1 wt% to 10 wt%, preferably, 3 wt% to 7 wt% in the second silicon-based active material, and, when the amount of the carbon coating layer is within the above range, it is desirable in terms of the fact that the coating layer may prevent the side reaction with the electrolyte solution while controlling the volume expansion of the second silicon-based active material to an excellent level.

The carbon coating layer may be an amorphous carbon coating layer. Specifically, the carbon coating layer may be formed by chemical vapor deposition (CVD) using at least one hydrocarbon gas which is selected from the group consisting of methane, ethane, and acetylene.

An average particle diameter ($D_{50}$) of the second silicon-based active material may be in a range of 1 μm to 15 μm, more preferably, 2 μm to 8 μm in terms of ensuring the structural stability of the active material during charge and discharge, preventing a problem in which a volume expansion/contraction level is increased as the particle diameter is excessively increased, and preventing a problem in which the initial efficiency is reduced due to the excessively small particle diameter.

The second silicon-based active material may be included in an amount of 1 wt% to 20 wt%, specifically, 3 wt% to 15 wt% in the second negative electrode active material layer 220 in order to secure the sufficient capacity of the negative electrode while reducing an effect on the volume expansion of the second silicon-based active material.

A method of preparing the second silicon-based active material is not particularly limited. Specifically, the second silicon-based active material may be prepared by a method including: (a) vaporizing a compound represented by $SiO_b$ ($0 \le b < 2$) to generate a first vapor; vaporizing the second metal to generate a second vapor; mixing the first vapor and the second vapor to perform a gas-phase reaction; and obtaining powder by cooling after the gas-phase reaction. During the preparation of the second silicon-based active material, a process of forming the carbon coating layer and a process of adjusting the average particle diameter ($D_{50}$), which are well known in the art, may be added.

The second carbon-based active material and the second silicon-based active material may be included in an amount of 90 wt% to 99 wt%, specifically, 94 wt% to 98 wt% in the second negative electrode active material layer 220. Also, a weight ratio of the second carbon-based active material to the second silicon-based active material may be in a range of 83:17 to 99:1, specifically, 88:12 to 93:7. When the weight ratio is within the above range, the sufficient capacity of the negative electrode may be secured and a high-loading negative electrode may be achieved while the effect on the volume expansion of the silicon-based active material is reduced.

The second binder is included in the second negative electrode active material layer 220 for binding between the first negative electrode active material layer 210 and the second negative electrode active material layer 220 and binding between the negative electrode active materials (the second carbon-based active material and the second silicon-based active material).

In terms of further improving the electrode adhesion and providing the sufficient resistance to the volume expansion/contraction of the active material, the second binder may include at least one selected from the group consisting of polyvinylidene fluoride (PVdF), styrene butadiene rubber (SBR), acrylonitrile butadiene rubber, acrylic rubber, butyl rubber, fluoro rubber, polyvinyl alcohol, carboxymethyl cellulose (CMC), starch, hydroxypropyl cellulose, regenerated cellulose, polyvinyl alcohol (PVA), polyacrylic acid (PAA), polyethylene glycol (PEG), polyacrylonitrile (PAN), and polyacrylamide (PAM), and may specifically include a styrene butadiene rubber (SBR).

The second binder may be included in an amount of 1 wt% to 15 wt%, particularly 1.5 wt% to 5.0 wt%, and more particularly 2.5 wt% to 3.5 wt% in the second negative electrode active material layer 220. However, the amount of the second binder needs to be adjusted in consideration of the relationship of the ratio of the weight ratio of the first binder to the weight ratio of the second binder which will be described later.

The second negative electrode active material layer 220 may further include a second conductive material together with the second carbon-based active material, the second silicon-based active material, and the second binder.

The second conductive material may be used to improve conductivity of the second negative electrode active material layer, and it is preferable that the second conductive material has conductivity without causing chemical changes.

Specifically, the second conductive material may be at least one selected from the group consisting of natural graphite, artificial graphite, carbon black, acetylene black, Ketjen black, channel black, furnace black, lamp black, thermal black, conductive fibers, Single-Wall Carbon Nanotubes (SWCNT), Multi-Wall Carbon Nanotubes (MWCNT), fluorocarbon, aluminum powder, nickel powder, zinc oxide, potassium titanate, titanium oxide, and polyphenylene derivatives, may preferably include at least one selected from single-walled carbon nanotubes and multi-walled carbon nanotubes in consideration of maintenance of a conductive network of the second silicon-based active material, and may more specifically include single-walled carbon nanotubes.

The second conductive material may be included in an amount of 0.001 wt% to 10 wt%, specifically, 0.01 wt% to 1 wt% in the second negative electrode active material layer 220, and, when the amount of the second conductive material is within the above range, it is preferable in terms of preventing disconnection of the conductive network due to the volume expansion of the negative electrode active material while being able to control a volume expansion due to charge and discharge.

The second negative electrode active material layer 220 may further include a thickener. The thickener may include carboxymethylcellulose (CMC).

The thickener may be included in an amount of 0.5 wt% to 5 wt% in the second negative electrode active material layer 220, but is not limited thereto.

The second negative electrode active material layer 220 may have a thickness of 10 μm to 100 μm, specifically, 15 μm to 45 μm, and, according to the present invention, since the second negative electrode active material layer may have excellent adhesion and thickness expansion control performance even if the second negative electrode active material layer has a thickness within the above range, the life performance may be improved to an excellent level.

The second negative electrode active material layer 220 may have a loading amount of 1 $mAh/cm^2$ to 5 $mAh/cm^2$, specifically, 2 $mAh/cm^2$ to 4 $mAh/cm^2$, and, according to the present invention, since the second negative electrode active material layer 220 may have excellent adhesion and thickness expansion control performance even if the second negative electrode active material layer 220 has a loading amount within the above range, the life performance may be improved to an excellent level.

In the present invention, a ratio of a weight percentage of the first binder based on a weight of the first negative electrode active material layer 210 to a weight percentage of the second binder based on a weight of the second negative electrode active material layer 220 is in a range of 0.9:1 to 5.5:1. In general, during preparation of a single-layer negative electrode, since a binder is unevenly distributed in an upper portion of the negative electrode (portion in contact with a separator), there is a problem in that adhesion of the entire negative electrode is reduced, but, according to the present invention, since the ratio of the first binder to the second binder is adjusted within the above range, the adhesion of the entire negative electrode may be improved. Particularly, since the first and second silicon-based active materials having different metal doping ratios from each other, together with the first and second binders having the above-described characteristics, are disposed in the first negative electrode active material layer and the second negative electrode active material layer, respectively, overall charge and discharge performance, adhesion, and effect of controlling the thickness expansion of the negative electrode may be simultaneously improved.

If, in a case in which the weight percentage of the first binder based on the weight of the first negative electrode active material layer relative to the weight percentage of the second binder based on the weight of the second negative electrode active material layer is less than 0.9 times, since excessive thickness expansion occurs during charge and discharge of the negative electrode due to occurrence of a phenomenon in which the binder of the first negative electrode active material layer is insufficient, the life performance of the secondary battery may be rapidly degraded. If, in a case in which the weight percentage of the first binder based on the weight of the first negative electrode active material layer relative to the weight percentage of the second binder based on the weight of the second negative electrode active material layer is greater than 5.5 times, since the adhesion between the first negative electrode active material layer and the second negative electrode active material layer may be reduced, excessive thickness expansion may occur during charge and discharge of the negative electrode, and thus, the life performance of the secondary battery may be rapidly degraded.

Specifically, the ratio of the weight percentage of the first binder based on the weight of the first negative electrode active material layer 210 to the weight percentage of the second binder based on the weight of the second negative electrode active material layer 220 may be in a range of 1.5:1 to 2.5:1, and, when the ratio is within the above range, the above-described effect may be better achieved.

A total weight of the first binder and the second binder may be in a range of 0.1 wt% to 10 wt%, specifically, 2 wt% to 8 wt% based on a total weight of the first negative electrode active material layer 210 and the second negative electrode active material layer 220. When the total weight of the first binder and the second binder is within the above range, it is desirable because a negative electrode having excellent capacity may be achieved along with the above-described effects of improving the adhesion and controlling the thickness expansion of the negative electrode.

A ratio of the thickness of the first negative electrode active material layer 210 to the thickness of the second negative electrode active material layer 220 may be in a range of 1:0.5 to 1:2, specifically, 1:0.8 to 1:1.3. When the ratio is within the above range, it is desirable in terms of the fact that the overall charge/discharge performance, the adhesion, and

the effect of controlling the thickness expansion of the negative electrode may be simultaneously improved.

A sum of the loading amount of the first negative electrode active material layer 210 and the loading amount of the second negative electrode active material layer 220 may be in a range of 4 $mAh/cm^2$ to 8 $mAh/cm^2$, particularly 4.0 $mAh/cm^2$ to 7.5 $mAh/cm^2$, and more particularly 4 $mAh/cm^2$ to 7 $mAh/cm^2$. According to the present invention, even the high-loading negative electrode as described above may have a high level of adhesion and an effect of controlling cell thickness expansion, and may have high life performance.

A ratio of the loading amount of the first negative electrode active material layer 210 to the loading amount of the second negative electrode active material layer 220 may be in a range of 1:0.5 to 1:2, specifically, 1:0.8 to 1:1.3. When the ratio is within the above range, it is desirable in terms of the fact that the overall charge and discharge performance, the adhesion, and the effect of controlling the thickness expansion of the negative electrode may be simultaneously improved.

Total electrode density of the first negative electrode active material layer 210 and the second negative electrode active material layer 220 may be in a range of 1.4 g/cc to 2.0 g/cc, particularly 1.5 g/cc to 1.9 g/cc, and more particularly 1.6 g/cc to 1.8 g/cc. According to the present invention, excellent life performance may be exhibited even at high electrode density and energy density.

Preparation of the negative electrode is not particularly limited as long as the first negative electrode active material layer and the second negative electrode active material layer, which have the above-described characteristics, may be achieved. For example, after the first carbon-based active material, the first silicon-based active material, the first binder, the first conductive material, and/or the thickener are dispersed in a solvent (e.g., water) to prepare a slurry for the first negative electrode active material layer and the second carbon-based active material, the second silicon-based active material, the second binder, and/or the second conductive material are dispersed in a solvent (e.g., water) to prepare a slurry for the second negative electrode active material layer, the negative electrode according to the present invention may be prepared by coating these slurries on the negative electrode current collector. More specifically, the negative electrode according to the present invention may be prepared by coating the negative electrode current collector with the above-prepared slurry for the first negative electrode active material layer, rolling, and drying to form the first negative electrode active material layer and by coating the above-prepared slurry for the second negative electrode active material layer on the first negative electrode active material layer, rolling, and drying to form the second negative electrode active material layer. The negative electrode according to the present invention may also be prepared by coating the negative electrode current collector with the slurry for the first negative electrode active material layer and substantially simultaneously coating the slurry for the second negative electrode active material layer on the slurry for the first negative electrode active material layer being coated, rolling, and drying.

**<Secondary Battery>**

Also, the present invention provides a secondary battery including the above-described negative electrode, specifically, a lithium secondary battery. Specifically, the secondary battery includes the above-described negative electrode; a positive electrode facing the negative electrode; a separator disposed between the negative electrode and the positive electrode; and an electrolyte.

Description of the negative electrode is as described above.

The positive electrode may include a positive electrode current collector; and a positive electrode active material layer disposed on the positive electrode current collector.

The positive electrode current collector is not particularly limited as long as it has high conductivity without causing adverse chemical changes in the battery. Specifically, the positive electrode current collector may include at least one selected from the group consisting of copper, stainless steel, aluminum, nickel, titanium, fired carbon, and an aluminum-cadmium alloy, and may specifically include aluminum.

The positive electrode current collector may typically have a thickness of 3 $\mu$m to 500 $\mu$m.

The positive electrode current collector may have a surface with fine roughness to improve adhesion to a positive electrode active material. For example, the positive electrode current collector may be used in various shapes, for example, a film, a sheet, a foil, a net, a porous body, a foam body, a non-woven fabric body, and the like.

The positive electrode active material layer may be disposed on the positive electrode current collector, and may specifically be disposed on one surface or both surfaces of the positive electrode current collector.

The positive electrode active material layer may include a positive electrode active material.

The positive electrode active material is a compound capable of reversibly intercalating and deintercalating lithium, wherein the positive electrode active material may specifically include a lithium transition metal composite oxide including lithium and at least one transition metal selected from nickel, cobalt, manganese, and aluminum, preferably, a lithium transition metal composite oxide including lithium and transition metal including nickel, cobalt, and manganese.

More specifically, the lithium transition metal composite oxide may include lithium-manganese-based oxide (e.g., $LiMnO_2$, $LiMn_2O_4$, etc.), lithium-cobalt-based oxide (e.g., $LiCoO_2$, etc.), lithium-nickel-based oxide (e.g., $LiNiO_2$, etc.), lithium-nickel-manganese-based oxide (e.g., $LiNi_{1-Y}Mn_YO_2$ (where $0<Y<1$), $LiMn_{2-Z}Ni_ZO_4$ (where $0<Z<2$), etc.), lithium-

nickel-cobalt-based oxide (e.g., $LiNi_{1-Y1}Co_{Y1}O_2$ (where 0<Y1<1), lithium-manganese-cobalt-based oxide (e.g., $LiCo_{1-Y2}Mn_{Y2}O_2$ (where 0<Y2<1), $LiMn_{2-Z1}Co_{Z1}O_4$ (where 0<Z1<2), etc.), lithium-nickel-manganese-cobalt-based oxide (e.g., $Li(Ni_pCo_qMn_{r1})O_2$ (where 0<p<1, 0<q<1, 0<r1<1, and p+q+r1=1) or Li $(Ni_{p1}Co_{q1}Mn_{r2})O_4$ (where 0<p1<2, 0<q1<2, 0<r2<2, and p1+q1+r2=2), etc.), or lithium-nickel-cobalt-transition metal (M) oxide (e.g., $Li(Ni_{p2}Co_{q2}Mn_{r3}M_{s2})O_2$ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are atomic fractions of each independent elements, wherein 0<p2<1, 0<q2<1, 0<r3<1, 0<S2<1, and p2+q2+r3+S2=1), etc.), and any one thereof or a m ixture of two or more thereof may be included. Among these materials, in terms of the improvement of capacity characteristics and stability of the battery, the lithium transition metal composite oxide may be $LiCoO_2$, $LiMnO_2$, $LiNiO_2$, lithium nickel-manganese-cobalt oxide (e.g., $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, or $Li(Ni_{0.8}Mn_{0.1}Co_{0.1})O_2$, etc.), or lithium nickel cobalt aluminum oxide (e.g., $Li(Ni_{0.8}Co_{0.15}Al_{0.05})O_2$, etc.).

More specifically, the positive electrode active material may include a lithium-cobalt-based oxide. The lithium-cobalt-based oxide may exhibit excellent stability even in a high voltage range, for example, at a charging voltage of 4.4 V or higher. Particularly, in a case in which the negative electrode according to the present invention and the positive electrode including a lithium-cobalt-based oxide are combined, excellent life performance may be exhibited at a high charging voltage.

An average particle diameter ($D_{50}$) of the positive electrode active material may be in a range of 10 μm to 30 μm, specifically, 15 μm to 20 μm, and, when the average particle diameter is within the above range, it is desirable in terms of the fact that high energy density of the positive electrode may be achieved and cracks or breakage of the positive electrode active material may be prevented.

The positive electrode active material may be included in an amount of 80 wt% to 99 wt%, preferably, 92 wt% to 98 wt% in the positive electrode active material layer in consideration of sufficient capacity exhibition of the positive electrode active material.

The positive electrode active material layer may further include a positive electrode binder and a positive electrode conductive material together with the above positive electrode active material.

The positive electrode binder is a component that assists in binding between the conductive material and the active material and in binding with the current collector, wherein the positive electrode binder may specifically include at least one selected from the group consisting of polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene terpolymer (EPDM), a sulfonated EPDM, a styrene-butadiene rubber, and a fluoro rubber, and may preferably include polyvinylidene fluoride.

The positive electrode binder may be included in an amount of 0.1 wt% to 10 wt%, preferably 0.1 wt% to 3 wt%, and more specifically 0.5 wt% to 2.5 wt% in the positive electrode active material layer in terms of sufficiently securing a binding force between components such as the positive electrode active material.

The positive electrode conductive material may be used to assist and improve conductivity of the secondary battery, and is not particularly limited as long as it has conductivity without causing chemical changes. Specifically, the conductive material may include at least one selected from the group consisting of graphite such as natural graphite or artificial graphite; carbon black such as carbon black, acetylene black, Ketjen black, channel black, furnace black, lamp black, and thermal black; conductive fibers such as carbon fibers or metal fibers; carbon nanotubes such as single-walled carbon nanotubes and multi-walled carbon nanotubes; fluorocarbon; metal powder such as aluminum powder and nickel powder; conductive whiskers such as zinc oxide whiskers and potassium titanate whiskers; conductive metal oxide such as titanium oxide; and polyphenylene derivatives, and may specifically include carbon black and carbon nanotubes, more specifically, carbon black and multi-walled carbon nanotubes in terms of improving the conductivity.

The positive electrode conductive material may be included in an amount of 0.1 wt% to 10 wt%, particularly 0.1 wt% to 3.0 wt%, and more particularly 0.5 wt% to 2.5 wt% in the positive electrode active material layer in terms of sufficiently securing electrical conductivity.

The positive electrode active material layer may have a thickness of 30 μm to 400 μm, preferably, 50 μm to 200 μm.

The positive electrode active material layer may have a loading amount of 3.5 $mAh/cm^2$ to 7.5 $mAh/cm^2$, specifically, 4.5 $mAh/cm^2$ to 6.5 $mAh/cm^2$.

The positive electrode may be prepared by coating the positive electrode current collector with a positive electrode slurry including the positive electrode active material and optionally the binder, the conductive material, and a solvent for forming the positive electrode slurry and then drying and rolling the coated positive electrode current collector.

The solvent for forming the positive electrode slurry may include an organic solvent, such as NMP (N-methyl-2-pyrrolidone), and may be used in an amount such that desirable viscosity is obtained when the positive electrode active material as well as optionally the binder and the conductive material are included. For example, the solvent for forming the positive electrode slurry may be included in the positive electrode slurry in an amount such that a concentration of a solid content including the positive electrode active material as well as optionally the binder and the conductive material is in a

range of 50 wt% to 95 wt%, preferably, 70 wt% to 90 wt%.

In the secondary battery of the present invention, an N/P ratio calculated by Equation 1 below may be in a range of 1.0 to 1.5, preferably, 1.0 to 1.2.

N/P ratio = {(discharge capacity per unit area of the negative electrode)/(discharge capacity per unit area of the positive electrode)}. [Equation 1]

When the N/P ratio is within the above range, life characteristics of the secondary battery may be further improved by minimizing an effect of volume expansion/contraction of the silicon-based active material on the battery while being able to exhibit high capacity and charging characteristics of the silicon-based active material.

Specifically, the discharge capacity per unit area of the negative electrode may be obtained by the following method. First, a negative electrode sample, which is the same as the negative electrode used, is prepared. A coin-type half-cell including the negative electrode sample, a lithium metal counter electrode facing the negative electrode, a separator disposed between the negative electrode and the lithium metal counter electrode, and an electrolyte is prepared, and discharge capacity is obtained. The discharge capacity per unit area of the negative electrode may be obtained by dividing the discharge capacity by an area of the negative electrode sample.

Also, the discharge capacity per unit area of the positive electrode may be obtained by the following method. First, a positive electrode sample, which is the same as the positive electrode used, is prepared. A coin-type half-cell including the positive electrode sample, a lithium metal counter electrode facing the positive electrode, a separator disposed between the positive electrode and the lithium metal counter electrode, and an electrolyte is prepared, and discharge capacity is obtained. The discharge capacity per unit area of the positive electrode may be obtained by dividing the discharge capacity by an area of the positive electrode sample.

The separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer component may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$ may be used as the lithium salt. The lithium salt may be used in a concentration range of 0.1 M to 2.0 M. If the concentration of the lithium salt is included within the above range, since the electrolyte may have appropriate conductivity and viscosity, excellent performance of the electrolyte may be obtained and lithium ions may effectively move.

The secondary battery may further include a battery case accommodating the negative electrode, the positive electrode, the separator, and the electrolyte.

The secondary battery may be prepared according to a conventional method of preparing a secondary battery in which an electrode assembly having a separator disposed between the above-described negative electrode and positive electrode is accommodated into the battery case and an electrolyte solution is injected thereinto.

**<Battery System>**

Furthermore, the present disclosure provides a battery system including the above-described secondary battery, which does not form part of the claimed invention.

Specifically, the battery system includes the above-described secondary battery and a control unit capable of setting a voltage range during charge and discharge of the secondary battery.

Description of the secondary battery is as described above.

The control unit is not particularly limited as long as it may control the voltage range during charge and discharge of the secondary battery, and the control unit, for example, may be an electrochemical charger/discharger. Specifically, the control unit may be embedded in a battery management system (BMS) included in a battery pack.

The voltage range by the control unit may be set to satisfy Equation 2 below.

[Equation 2]

$$0.60 \leq (V_{max} - X)/Y \leq 0.67$$

In Equation 2, $V_{max}$ is the maximum voltage set by the control unit, Y is a value calculated by the formula $V_{max}$-$V_{min}$/1.47, wherein $V_{min}$ is the minimum voltage set by the control unit, and X is an average voltage when the secondary battery is charged and discharged with $V_{max}$ and $V_{min}$.

In Equation 2, $V_{max}$ may be in a range of 4.4 V to 4.6 V, specifically, 4.40 V to 4.55 V, and $V_{min}$ may be in a range of 2.8 V to 3.3 V, specifically, 3.0 V to 3.3 V. According to the present invention, since the secondary battery may exhibit high life performance even when used at a high voltage, a battery system having excellent life performance within the above ranges of $V_{max}$ and $V_{min}$ may be achieved.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

## Examples

Example 1: Preparation of Negative Electrode and Secondary Battery

1. Preparation of Negative Electrode

<Preparation of First Silicon-base Active Material>

SiO, as a first silicon-based compound, was contained in a first tray, and a first heat treatment was performed at 1,400°C in a reduced-pressure atmosphere of -100 torr to generate a first vapor. Also, Mg, as a first metal, was contained in a second tray, and a second heat treatment was performed at 900°C in a reduced-pressure atmosphere of -100 torr to generate a second vapor. The first heat treatment and the second heat treatment in each of the trays were performed independently. A weight ratio of the SiO contained in the first tray to the metal contained in the second tray was 86.1:13.9.

The first vapor and the second vapor were mixed in one reactor and reacted in a gas phase for 8 hours.

After the completion of the gas-phase reaction, the reaction product was cooled from 900°C to prepare a silicon-based compound doped with Mg. The cooling was performed for 8 hours.

The Mg-doped silicon-based compound was pulverized with a jet mill.

Thereafter, the Mg-doped silicon-based compound was subjected to a chemical vapor deposition (CVD) treatment under a mixed gas of argon (Ar) and methane ($CH_4$) at 950°C for 4 hours to form a carbon coating layer on a surface of the Mg-doped silicon-based compound, and it was set as a first silicon-based active material of Example 1. In the first silicon-based active material, a weight of Mg was 13.9 wt% based on a total weight of SiO and Mg. The first silicon-based active material had an average particle diameter ($D_{50}$) of 7 μm and included 4 wt% of the carbon coating layer.

<Preparation of Second Silicon-base Active Material>

A second silicon-based active material was prepared in the same manner as the preparation method of the first silicon-based active material except that the weight ratio of the SiO contained in the first tray to the metal contained in the second tray was adjusted to 91.7:8.3. In the second silicon-based active material, a weight of Mg was 8.3 wt% based on a total weight of SiO and Mg. The second silicon-based active material had an average particle diameter ($D_{50}$) of 7 μm and included 4 wt% of a carbon coating layer.

<Preparation of Slurry for First Negative Electrode Active Material Layer>

Artificial graphite (average particle diameter ($D_{50}$): 18 μm) as a first carbon-based active material, the above-prepared first silicon-based active material, a styrene butadiene rubber (SBR) as a first binder, carboxymethylcellulose (CMC) as a thickener, and single-walled carbon nanotubes (SWCNT), as a first conductive material, were mixed in a weight ratio of 86.1:9.6:3.0:1.0:0.3, and water, as a solvent of a slurry for a first negative electrode active material layer, was added to prepare a slurry for a first negative electrode active material layer.

<Preparation of Slurry for Second Negative Electrode Active Material Layer>

Artificial graphite (average particle diameter ($D_{50}$): 18 um) as a second carbon-based active material, the above-prepared second silicon-based active material, a styrene butadiene rubber (SBR) as a second binder, carboxymethylcellulose (CMC) as a thickener, and single-walled carbon nanotubes (SWCNT), as a second conductive material, were mixed in a weight ratio of 86.1:9.6:3.0:1.0:0.3, and water, as a solvent of a slurry for a second negative electrode active material layer, was added to prepare a slurry for a second negative electrode active material layer.

<Formation of First and Second Negative Electrode Active Material Layers>

While coating a copper foil (thickness: 6 um), as a negative electrode current collector, with the above-prepared slurry for a first negative electrode active material layer, the above-prepared slurry for a second negative electrode active material layer was substantially simultaneously coated on the coated slurry for a first negative electrode active material layer, roll pressed, and dried in a vacuum oven at 130°C for 10 hours to prepare a negative electrode in which the negative electrode current collector, the first negative electrode active material layer, and the second negative electrode active material layer were sequentially stacked.

A ratio of a weight ratio (3 w%, based on 100 wt% of the first negative electrode active material layer) of the first binder of the first negative electrode active material layer to a weight ratio (3 w%, based on 100 wt% of the second negative electrode active material layer) of the second binder of the second negative electrode active material layer was about 1:1.

A total weight of the first binder and the second binder was 3 wt% based on a total weight of the first negative electrode active material layer and the second negative electrode active material layer.

A loading amount of the first negative electrode active material layer was 2.75 mAh/$cm^2$, a loading amount of the second negative electrode active material layer was 2.75 mAh/$cm^2$, and a sum of the loading amounts of the first negative electrode active material layer and the second negative electrode active material layer was 5.5 mAh/$cm^2$.

A thickness of the first negative electrode active material layer was 31.75 μm, a thickness of the second negative electrode active material layer was 31.75 μm, and a sum of the thicknesses of the first negative electrode active material layer and the second negative electrode active material layer was 63.5 μm.

Electrode density of the first negative electrode active material layer and the second negative electrode active material layer was 1.7 g/cc.

2. Preparation of Secondary Battery

$LiCoO_2$ (average particle diameter ($D_{50}$): 16.5 μm) as a positive electrode active material, a mixture of carbon black and multi-walled carbon nanotubes in a weight ratio of 1:0.5, as a conductive material, and polyvinylidene fluoride (PVdF), as a binder, were added to N-methyl-2-pyrrolidone (NMP), as a solvent for forming a positive electrode slurry, in a weight ratio of 96.0:1.5:1.5 to prepare a positive electrode slurry.

An aluminum current collector (thickness: 10 μm), as a positive electrode current collector, was coated with the positive electrode slurry at a loading amount of 5.2 mAh/$cm^2$, roll-pressed, and dried in a vacuum oven at 130°C for 10 hours to form a positive electrode active material layer (thickness: 63.5 μm) to prepare a positive electrode (thickness of the positive electrode: 73.5 μm).

A secondary battery of Example 1 was prepared by disposing a polyethylene separator between the above-prepared negative electrode and positive electrode, and injecting an electrolyte. One, in which 3 wt% of vinylene carbonate

was added to an organic solvent, in which fluoroethylene carbonate (FEC), ethylene carbonate (EC), and ethyl propionate (EP) were mixed in a volume ratio of 20:20:60, and $LiPF_6$, as a lithium salt, was added at a concentration of 1 mol/L, was used the electrolyte.

An N/P ratio of the secondary battery of Example 1 was 1.07.

Example 2: Preparation of Negative Electrode and Secondary Battery

1. Preparation of Negative Electrode

<Preparation of Slurry for First Negative Electrode Active Material Layer>

A slurry for a first negative electrode active material layer was prepared in the same manner as in Example 1 except that the first carbon-based active material, the first silicon-based active material, the first binder, the thickener, and the first conductive material were mixed in a weight ratio of 85.2:9.5:4.0:1.0:0.3.

<Preparation of Slurry for Second Negative Electrode Active Material Layer>

A slurry for a second negative electrode active material layer was prepared in the same manner as in Example 1 except that the second carbon-based active material, the second silicon-based active material, the second binder, the thickener, and the second conductive material were mixed in a weight ratio of 87.0:9.7:2.0:1.0:0.3.

<Formation of First and Second Negative Electrode Active Material Layers>

While coating a copper foil (thickness: 6 μm), as a negative electrode current collector, with the above-prepared slurry for a first negative electrode active material layer, the above-prepared slurry for a second negative electrode active material layer was substantially simultaneously coated on the coated slurry for a first negative electrode active material layer, roll pressed, and dried in a vacuum oven at 130°C for 10 hours to prepare a negative electrode in which the negative electrode current collector, the first negative electrode active material layer, and the second negative electrode active material layer were sequentially stacked.

A ratio of a weight ratio (4 w%, based on 100 wt% of the first negative electrode active material layer) of the first binder of the first negative electrode active material layer to a weight ratio (2 w%, based on 100 wt% of the second negative electrode active material layer) of the second binder of the second negative electrode active material layer was about 2:1.

A total weight of the first binder and the second binder was 3 wt% based on a total weight of the first negative electrode active material layer and the second negative electrode active material layer.

A loading amount of the first negative electrode active material layer was 2.75 mAh/cm$^2$, a loading amount of the second negative electrode active material layer was 2.75 mAh/cm$^2$, and a sum of the loading amounts of the first negative electrode active material layer and the second negative electrode active material layer was 5.5 mAh/cm$^2$.

A thickness of the first negative electrode active material layer was 31.75 μm, a thickness of the second negative electrode active material layer was 31.75 μm, and a sum of the thicknesses of the first negative electrode active material layer and the second negative electrode active material layer was 63.5 μm.

Electrode density of the first negative electrode active material layer and the second negative electrode active material layer was 1.7 g/cc.

2. Preparation of Secondary Battery

A secondary battery was prepared in the same manner as in Example 1 except that the above-prepared negative electrode was used.

An N/P ratio of the secondary battery of Example 2 was 1.07.

Example 3: Preparation of Negative Electrode and Secondary Battery

A second silicon-based active material was prepared in the same manner as the preparation method of the second silicon-based active material of Example 2 except that the weight ratio of the SiO contained in the first tray to the metal contained in the second tray was adjusted to 90.2:9.8. In the second silicon-based active material, a weight of Mg was 9.8 wt% based on a total weight of SiO and Mg. The second silicon-based active material had an average particle diameter ($D_{50}$) of 7 μm and included 4 wt% of a carbon coating layer.

A negative electrode and a secondary battery were prepared in the same manner as in Example 2 except that the above-prepared second silicon-based active material was used instead of the second silicon-based active material used in

Example 2.

A loading amount of the first negative electrode active material layer was 2.75 $mAh/cm^2$, a loading amount of the second negative electrode active material layer was 2.75 $mAh/cm^2$, and a sum of the loading amounts of the first negative electrode active material layer and the second negative electrode active material layer was 5.5 $mAh/cm^2$.

A thickness of the first negative electrode active material layer was 31.75 μm, a thickness of the second negative electrode active material layer was 31.75 μm, and a sum of the thicknesses of the first negative electrode active material layer and the second negative electrode active material layer was 63.5 μm.

Electrode density of the first negative electrode active material layer and the second negative electrode active material layer was 1.7 g/cc.

An N/P ratio of the secondary battery of Example 3 was 1.07.

Example 4: Preparation of Negative Electrode and Secondary Battery

A second silicon-based active material was prepared in the same manner as the preparation method of the second silicon-based active material of Example 2 except that the weight ratio of the SiO contained in the first tray to the metal contained in the second tray was adjusted to 94.2:5.8. In the second silicon-based active material, a weight of Mg was 5.8 wt% based on a total weight of SiO and Mg. The second silicon-based active material had an average particle diameter ($D_{50}$) of 7 μm and included 4 wt% of a carbon coating layer.

A negative electrode and a secondary battery were prepared in the same manner as in Example 2 except that the above-prepared second silicon-based active material was used instead of the second silicon-based active material used in Example 2.

A loading amount of the first negative electrode active material layer was 2.75 $mAh/cm^2$, a loading amount of the second negative electrode active material layer was 2.75 $mAh/cm^2$, and a sum of the loading amounts of the first negative electrode active material layer and the second negative electrode active material layer was 5.5 $mAh/cm^2$.

A thickness of the first negative electrode active material layer was 31.75 μm, a thickness of the second negative electrode active material layer was 31.75 μm, and a sum of the thicknesses of the first negative electrode active material layer and the second negative electrode active material layer was 63.5 μm.

Electrode density of the first negative electrode active material layer and the second negative electrode active material layer was 1.7 g/cc.

An N/P ratio of the secondary battery of Example 4 was 1.07.

Example 5: Preparation of Negative Electrode and Secondary Battery

A first silicon-based active material was prepared in the same manner as the preparation method of the first silicon-based active material of Example 2 except that the weight ratio of the SiO contained in the first tray to the metal contained in the second tray was adjusted to 79.6:20.4. In the first silicon-based active material, a weight of Mg was 20.4 wt% based on a total weight of SiO and Mg. The first silicon-based active material had an average particle diameter ($D_{50}$) of 7 μm and included 4 wt% of a carbon coating layer.

A negative electrode and a secondary battery were prepared in the same manner as in Example 2 except that the above-prepared first silicon-based active material was used instead of the first silicon-based active material used in Example 2.

A loading amount of the first negative electrode active material layer was 2.75 $mAh/cm^2$, a loading amount of the second negative electrode active material layer was 2.75 $mAh/cm^2$, and a sum of the loading amounts of the first negative electrode active material layer and the second negative electrode active material layer was 5.5 $mAh/cm^2$.

A thickness of the first negative electrode active material layer was 31.75 μm, a thickness of the second negative electrode active material layer was 31.75 μm, and a sum of the thicknesses of the first negative electrode active material layer and the second negative electrode active material layer was 63.5 μm.

Electrode density of the first negative electrode active material layer and the second negative electrode active material layer was 1.7 g/cc.

An N/P ratio of the secondary battery of Example 5 was 1.07.

Example 6: Preparation of Negative Electrode and Secondary Battery

A first silicon-based active material was prepared in the same manner as the preparation method of the first silicon-based active material of Example 2 except that the weight ratio of the SiO contained in the first tray to the metal contained in the second tray was adjusted to 89.7:10.3. In the first silicon-based active material, a weight of Mg was 10.3 wt% based on a total weight of SiO and Mg. The first silicon-based active material had an average particle diameter ($D_{50}$) of 7 μm and included 4 wt% of a carbon coating layer.

A negative electrode and a secondary battery were prepared in the same manner as in Example 2 except that the above-prepared first silicon-based active material was used instead of the first silicon-based active material used in Example 2.

A loading amount of the first negative electrode active material layer was 2.75 mAh/cm$^2$, a loading amount of the second negative electrode active material layer was 2.75 mAh/cm$^2$, and a sum of the loading amounts of the first negative electrode active material layer and the second negative electrode active material layer was 5.5 mAh/cm$^2$.

A thickness of the first negative electrode active material layer was 31.75 μm, a thickness of the second negative electrode active material layer was 31.75 μm, and a sum of the thicknesses of the first negative electrode active material layer and the second negative electrode active material layer was 63.5 μm.

Electrode density of the first negative electrode active material layer and the second negative electrode active material layer was 1.7 g/cc.

An N/P ratio of the secondary battery of Example 6 was 1.07.

<u>Comparative Example 1: Preparation of Negative Electrode and Secondary Battery</u>

1. Preparation of Negative Electrode

A slurry for a negative electrode active material layer, which was the same as the slurry for a second negative electrode active material layer prepared in Example 2, was prepared.

A copper current collector (thickness: 6 μm), as a negative electrode current collector, was coated with the negative electrode slurry at a loading amount of 5.5 mAh/cm$^2$, roll-pressed, and dried in a vacuum oven at 130°C for 10 hours to form a negative electrode active material layer (thickness: 63.5 μm) and it was used as a negative electrode (electrode density: 1.7 g/cc).

2. Preparation of Secondary Battery

A secondary battery was prepared in the same manner as in Example 1 except that the above-prepared negative electrode was used instead of the negative electrode of Example 1.

An N/P ratio of the secondary battery of Comparative Example 1 was 1.07.

<u>Comparative Example 2: Preparation of Negative Electrode and Secondary Battery</u>

1. Preparation of Negative Electrode

<Preparation of Slurry for First Negative Electrode Active Material Layer>

A slurry for a first negative electrode active material layer was prepared in the same manner as in Example 2 except that the first carbon-based active material, the first silicon-based active material, the first binder, the thickener, and the first conductive material were mixed in a weight ratio of 87.0:9.7:2.0:1.0:0.3.

<Preparation of Slurry for Second Negative Electrode Active Material Layer>

A slurry for a second negative electrode active material layer was prepared in the same manner as in Example 2 except that the second carbon-based active material, the second silicon-based active material, the second binder, the thickener, and the second conductive material were mixed in a weight ratio of 85.2:9.5:4.0:1.0:0.3.

<Formation of First and Second Negative Electrode Active Material Layers>

While coating a copper foil (thickness: 6 μm), as a negative electrode current collector, with the above-prepared slurry for a first negative electrode active material layer, the above-prepared slurry for a second negative electrode active material layer was substantially simultaneously coated on the coated slurry for a first negative electrode active material layer, roll pressed, and dried in a vacuum oven at 130°C for 10 hours to prepare a negative electrode in which the negative electrode current collector, the first negative electrode active material layer, and the second negative electrode active material layer were sequentially stacked.

A ratio of a weight ratio (2 w%, based on 100 wt% of the first negative electrode active material layer) of the first binder of the first negative electrode active material layer to a weight ratio (4 w%, based on 100 wt% of the second negative electrode active material layer) of the second binder of the second negative electrode active material layer was about 0.5:1.

A total weight of the first binder and the second binder was 3 wt% based on a total weight of the first negative electrode active material layer and the second negative electrode active material layer.

A loading amount of the first negative electrode active material layer was 2.75 mAh/cm$^2$, a loading amount of the second negative electrode active material layer was 2.75 mAh/cm$^2$, and a sum of the loading amounts of the first negative electrode active material layer and the second negative electrode active material layer was 5.5 mAh/cm$^2$.

A thickness of the first negative electrode active material layer was 31.75 μm, a thickness of the second negative electrode active material layer was 31.75 μm, and a sum of the thicknesses of the first negative electrode active material layer and the second negative electrode active material layer was 63.5 μm.

Electrode density of the first negative electrode active material layer and the second negative electrode active material layer was 1.7 g/cc.

2. Preparation of Secondary Battery

A secondary battery was prepared in the same manner as in Example 2 except that the above-prepared negative electrode was used.

An N/P ratio of the secondary battery of Comparative Example 2 was 1.07.

Comparative Example 3: Preparation of Negative Electrode and Secondary Battery

1. Preparation of Negative Electrode

<Preparation of Slurry for First Negative Electrode Active Material Layer>

A slurry for a first negative electrode active material layer was prepared in the same manner as in Example 2 except that the first carbon-based active material, the first silicon-based active material, the first binder, the thickener, and the first conductive material were mixed in a weight ratio of 84.0:9.3:5.4:1.0:0.3.

<Preparation of Slurry for Second Negative Electrode Active Material Layer>

A slurry for a second negative electrode active material layer was prepared in the same manner as in Example 2 except that the second carbon-based active material, the second silicon-based active material, the second binder, the thickener, and the second conductive material were mixed in a weight ratio of 88.3:9.8:0.6:1.0:0.3.

<Formation of First and Second Negative Electrode Active Material Layers>

While coating a copper foil (thickness: 6 μm), as a negative electrode current collector, with the above-prepared slurry for a first negative electrode active material layer, the above-prepared slurry for a second negative electrode active material layer was substantially simultaneously coated on the coated slurry for a first negative electrode active material layer, roll pressed, and dried in a vacuum oven at 130°C for 10 hours to prepare a negative electrode in which the negative electrode current collector, the first negative electrode active material layer, and the second negative electrode active material layer were sequentially stacked.

A ratio of a weight ratio (5.4 w%, based on 100 wt% of the first negative electrode active material layer) of the first binder of the first negative electrode active material layer to a weight ratio (0.6 w%, based on 100 wt% of the second negative electrode active material layer) of the second binder of the second negative electrode active material layer was about 9:1.

A total weight of the first binder and the second binder was 3 wt% based on a total weight of the first negative electrode active material layer and the second negative electrode active material layer.

A loading amount of the first negative electrode active material layer was 2.75 mAh/cm$^2$, a loading amount of the second negative electrode active material layer was 2.75 mAh/cm$^2$, and a sum of the loading amounts of the first negative electrode active material layer and the second negative electrode active material layer was 5.5 mAh/cm$^2$.

A thickness of the first negative electrode active material layer was 31.75 μm, a thickness of the second negative electrode active material layer was 31.75 μm, and a sum of the thicknesses of the first negative electrode active material layer and the second negative electrode active material layer was 63.5 μm.

Electrode density of the first negative electrode active material layer and the second negative electrode active material layer was 1.7 g/cc.

2. Preparation of Secondary Battery

A secondary battery was prepared in the same manner as in Example 2 except that the above-prepared negative electrode was used.

An N/P ratio of the secondary battery of Comparative Example 3 was 1.07.

Comparative Example 4: Preparation of Negative Electrode and Secondary Battery

1. Preparation of Negative Electrode

<Preparation of Slurry for First Negative Electrode Active Material Layer>

A slurry for a first negative electrode active material layer was prepared in the same manner as in Example 2 except that the second silicon-based active material prepared in Example 2 was used instead of the first silicon-based active material prepared in Example 2.

<Preparation of Slurry for Second Negative Electrode Active Material Layer>

A slurry for a second negative electrode active material layer was prepared in the same manner as in Example 2 except that the first silicon-based active material prepared in Example 2 was used instead of the second silicon-based active material prepared in Example 2.

<Formation of First and Second Negative Electrode Active Material Layers>

While coating a copper foil (thickness: 6 μm), as a negative electrode current collector, with the above-prepared slurry for a first negative electrode active material layer, the above-prepared slurry for a second negative electrode active material layer was substantially simultaneously coated on the coated slurry for a first negative electrode active material layer, roll pressed, and dried in a vacuum oven at 130°C for 10 hours to prepare a negative electrode in which the negative electrode current collector, the first negative electrode active material layer, and the second negative electrode active material layer were sequentially stacked.

A loading amount of the first negative electrode active material layer was 2.75 $mAh/cm^2$, a loading amount of the second negative electrode active material layer was 2.75 $mAh/cm^2$, and a sum of the loading amounts of the first negative electrode active material layer and the second negative electrode active material layer was 5.5 $mAh/cm^2$.

A thickness of the first negative electrode active material layer was 31.75 μm, a thickness of the second negative electrode active material layer was 31.75 μm, and a sum of the thicknesses of the first negative electrode active material layer and the second negative electrode active material layer was 63.5 μm.

Electrode density of the first negative electrode active material layer and the second negative electrode active material layer was 1.7 g/cc.

2. Preparation of Secondary Battery

A secondary battery was prepared in the same manner as in Example 1 except that the above-prepared negative electrode was used.

An N/P ratio of the secondary battery of Comparative Example 4 was 1.07.

## Experimental Examples

### Experimental Example 1: Adhesion Evaluation

The negative electrode of Example 1 was punched out to a size of 2 cm × 7 cm to prepare a negative electrode sample. Thereafter, the negative electrode sample was immersed in an electrolyte for 3 hours and washed with dimethyl carbonate. In this case, one, in which 3 wt% of vinylene carbonate was added to an organic solvent, in which fluoroethylene carbonate (FEC), ethylene carbonate (EC), and ethyl propionate (EP) were mixed in a volume ratio of 20:20:60, and $LiPF_6$, as a lithium salt, was added at a concentration of 1 mol/L, was used as the electrolyte.

After attaching a double-sided tape on a slide glass, an active material layer of the negative electrode sample was positioned so that it may be in contact with a surface to which the tape was attached, and rubbed 10 times using a roller. Thereafter, peel-off was performed at a speed of 10 cm/min at 90 degrees using a peel test machine, and a force (unit: gf/20 mm) in this case was measured.

The negative electrodes of Examples 2 to 6 and Comparative Examples 1 to 4 were also tested in the same manner as above. The results thereof are presented in Table 1 below.

**Experimental Example 2: Life Characteristics Evaluation**

Cycle capacity retention ratios of the secondary batteries prepared in Examples 1 to 6 and Comparative Examples 1 to 4 were evaluated using an electrochemical charge/discharger.
The cycle capacity retention ratios were measured at a temperature of 25°C, and charging and discharging conditions are as follows.
Charging conditions: CC/CV (constant current/constant voltage) mode, 4.5 V, 0.8 C, 0.05 C cut off.
Discharging conditions: CC mode, 0.5 C, 3.2 V cut off.
The capacity retention ratio was calculated as follows.

Capacity retention ratio(%)={ (discharge capacity in an $N^{th}$ cycle) / (discharge capacity in a $1^{st}$ cycle) }×100

(In the above equation, N is an integer of 1 or more.)
$200^{th}$ cycle capacity retention ratios (%) are presented in Table 1 below.

[Table 1]

| | Adhesion (gf/20mm) | $200^{th}$ cycle capacity retention ratio(%) |
|---|---|---|
| Example 1 | 30 | 87.7 |
| Example 2 | 43 | 90.8 |
| Example 3 | 41 | 86.4 |
| Example 4 | 43 | 81.7 |
| Example 5 | 41 | 76.9 |
| Example 6 | 43 | 84.6 |
| Comparative Example 1 | 9 | 58.2 |
| Comparative Example 2 | 17 | 66.9 |
| Comparative Example 3 | 14 | 64.4 |
| Comparative Example 4 | 40 | 73.2 |

Referring to Table 1, with respect to the negative electrodes and secondary batteries of Examples 1 to 6, since the ratio of the first binder to the second binder was adjusted to a desired level and the metal doping ratio of the first silicon-based active material to the second silicon-based active material was preferably adjusted, it may be confirmed that they exhibited better adhesion and life performance than Comparative Examples 1 to 4.

[Description of the Symbols]

10: Negative Electrode
100: Negative Electrode current collector
210: First Negative Electrode Active Material Layer
220: Second Negative Electrode Active Material Layer

**Claims**

**1.** A negative electrode (10) comprising:

a negative electrode current collector;
a first negative electrode active material layer (210) disposed on the negative electrode current collector (100) and including a first carbon-based active material, a first silicon-based active material, and a first binder; and

a second negative electrode active material layer (220) disposed on the first negative electrode active material layer (210) and including a second carbon-based active material, a second silicon-based active material, and a second binder,
wherein the first silicon-based active material comprises a first silicon-based compound represented by $SiO_x$ ($0 \le x < 2$) and a first metal doped in the first silicon-based compound, and
the second silicon-based active material comprises a second silicon-based compound represented by $SiO_y$ ($0 \le y < 2$) and a second metal doped in the second silicon-based compound,
wherein a weight ratio of the first metal based on a total weight of the first silicon-based compound and the first metal is greater than a weight ratio of the second metal based on a total weight of the second silicon-based compound and the second metal, and
a ratio of a weight percentage of the first binder based on a weight of the first negative electrode active material layer (210) to a weight percentage of the second binder based on a weight of the second negative electrode active material layer (220) is in a range of 0.9: 1 to 5.5:1,
wherein a weight of the first metal is in a range of 10 wt% to 25 wt% based on the total weight of the first silicon-based compound and the first metal, and
a weight of the second metal is in a range of 3 wt% or more to less than 10 wt% based on the total weight of the second silicon-based compound and the second metal,
wherein the first metal and the second metal each independently comprise at least one metal selected from the group consisting of lithium (Li), magnesium (Mg), calcium (Ca), and aluminum (Al).

**2.** The negative electrode (10) of claim 1, wherein the first carbon-based active material and the first silicon-based active material are included in an amount of 90 wt% to 99 wt% in the first negative electrode active material layer (210), and a weight ratio of the first carbon-based active material to the first silicon-based active material is in a range of 85:15 to 99:1.

**3.** The negative electrode (10) of claim 1, wherein the second carbon-based active material and the second silicon-based active material are included in an amount of 90 wt% to 99 wt% in the second negative electrode active material layer (220), and
a weight ratio of the second carbon-based active material to the second silicon-based active material is in a range of 85:15 to 99:1.

**4.** The negative electrode (10) of claim 1, wherein the first binder is included in an amount of 1 wt% to 15 wt% in the first negative electrode active material layer (210).

**5.** The negative electrode (10) of claim 1, wherein the second binder is included in an amount of 1 wt% to 15 wt% in the second negative electrode active material layer (220).

**6.** The negative electrode (10) of claim 1, wherein a total weight of the first binder and the second binder is in a range of 1 wt% to 15 wt% based on a total weight of the first negative electrode active material layer (210) and the second negative electrode active material layer (220).

**7.** The negative electrode (10) of claim 1, wherein the first binder and the second binder each independently comprise at least one selected from the group consisting of polyvinylidene fluoride, styrene butadiene rubber, acrylonitrile butadiene rubber, acrylic rubber, butyl rubber, fluoro rubber, polyvinyl alcohol, polyacrylic acid, polyethylene glycol, polyacrylonitrile, and polyacrylamide.

**8.** The negative electrode (10) of claim 1, wherein the first binder and the second binder comprise a styrene butadiene rubber.

**9.** The negative electrode (10) of claim 1, wherein a ratio of a thickness of the first negative electrode active material layer (210) to a thickness of the second negative electrode active material layer (220) is in a range of 1:0.5 to 1:2.

**10.** The negative electrode (10) of claim 1, wherein a sum of a loading amount of the first negative electrode active material layer (210) and a loading amount of the second negative electrode active material layer (220) is in a range of 4 $mAh/cm^2$ to 8 $mAh/cm^2$.

**11.** A secondary battery comprising:

the negative electrode (10) of claim 1;
a positive electrode facing the negative electrode (10);
a separator disposed between the negative electrode (10) and the positive electrode; and
an electrolyte.

**12.** The secondary battery of claim 11, wherein the positive electrode comprises a positive electrode current collector; and a positive electrode active material layer disposed on the positive electrode current collector,
wherein the positive electrode active material layer comprises a positive electrode active material including a lithium-cobalt-based oxide.

## Patentansprüche

**1.** Negative Elektrode (10), umfassend:

einen Stromkollektor der negativen Elektrode;
eine erste aktive Materialschicht (210) der negativen Elektrode, die auf dem Stromkollektor (100) der negativen Elektrode angeordnet ist, und ein erstes aktives Material auf Kohlenstoffbasis, ein erstes aktives Material auf Siliziumbasis und ein erstes Bindemittel einschließt; und
eine zweite aktive Materialschicht (220) der negativen Elektrode, die auf der ersten aktiven Materialschicht (210) der negativen Elektrode angeordnet ist und ein zweites aktives Material auf Kohlenstoffbasis, ein zweites aktives Material auf Siliziumbasis und ein zweites Bindemittel einschließt,
wobei das erste aktive Material auf Siliziumbasis eine erste Verbindung auf Siliziumbasis, dargestellt durch $SiO_x$ ($0 \leq x < 2$), und ein in die erste Verbindung auf Siliziumbasis dotiertes erstes Metall umfasst, und
das zweite aktive Material auf Siliziumbasis eine zweite Verbindung auf Siliziumbasis, dargestellt durch $SiO_y$ ($0 \leq y < 2$), und ein in die zweite Verbindung auf Siliziumbasis dotierte Verbindung umfasst,
wobei ein Gewichtsverhältnis des ersten Metalls, basierend auf einem Gesamtgewicht der ersten Verbindung auf Siliziumbasis und des ersten Metalls, größer ist als ein Gewichtsverhältnis des zweiten Metalls, basierend auf einem Gesamtgewicht der zweiten Verbindung auf Siliziumbasis und des zweiten Metalls, und
ein Verhältnis eines Gewichtsprozentanteils des ersten Bindemittels, basierend auf einem Gewicht der ersten aktiven Materialschicht (210) der negativen Elektrode zu einem Gewichtsprozentanteil des zweiten Bindemittels, basierend auf einem Gewicht der zweiten aktiven Materialschicht (220) der negativen Elektrode, in einem Bereich von 0,9:1 bis 5,5:1 liegt,
wobei ein Gewicht des ersten Metalls in einem Bereich von 10 Gew.-% bis 25 Gew.-%, basierend auf dem Gesamtgewicht der ersten Verbindung auf Siliziumbasis und des ersten Metalls, liegt und
ein Gewicht des zweiten Metalls in einem Bereich von 3 Gew.-% oder mehr bis weniger als 10 Gew.-%, basierend auf dem Gesamtgewicht der zweiten Verbindung auf Siliziumbasis und des zweiten Metalls, liegt,
wobei das erste Metall und das zweite Metall jeweils unabhängig voneinander mindestens ein Metall umfassen, das aus der Gruppe ausgewählt ist, die aus Lithium (Li), Magnesium (Mg), Kalzium (Ca) und Aluminium (Al) besteht.

**2.** Negative Elektrode (10) nach Anspruch 1, wobei das erste aktive Material auf Kohlenstoffbasis und das erste aktive Material auf Siliziumbasis in einer Menge von 90 Gew.-% bis 99 Gew.-% in der ersten aktiven Materialschicht (210) der negativen Elektrode eingeschlossen sind, und
ein Gewichtsverhältnis des ersten aktiven Materials auf Kohlenstoffbasis zum ersten aktiven Material auf Siliziumbasis in einem Bereich von 85:15 bis 99:1 liegt.

**3.** Negative Elektrode (10) nach Anspruch 1, wobei das zweite aktive Material auf Kohlenstoffbasis und das zweite aktive Material auf Siliziumbasis in einer Menge von 90 Gew.-% bis 99 Gew.-% in der zweiten aktiven Materialschicht (220) der negativen Elektrode eingeschlossen sind und
ein Gewichtsverhältnis des zweiten aktiven Materials auf Kohlenstoffbasis zum zweiten aktiven Material auf Siliziumbasis in einem Bereich von 85:15 bis 99:1 liegt.

**4.** Negative Elektrode (10) nach Anspruch 1, wobei das erste Bindemittel in einer Menge von 1 Gew.-% bis 15 Gew.-% in der ersten aktiven Materialschicht (210) der negativen Elektrode eingeschlossen ist.

**5.** Negative Elektrode (10) nach Anspruch 1, wobei das zweite Bindemittel in einer Menge von 1 Gew.-% bis 15 Gew.-% in der zweiten aktiven Materialschicht (220) der negativen Elektrode eingeschlossen ist.

6. Negative Elektrode (10) nach Anspruch 1, wobei ein Gesamtgewicht des ersten Bindemittels und des zweiten Bindemittels in einem Bereich von 1 Gew.-% bis 15 Gew.-%, basierend auf einem Gesamtgewicht der ersten aktiven Materialschicht (210) der negativen Elektrode und der zweiten Materialschicht (220) der negativen Elektrode, liegt.

7. Negative Elektrode (10) nach Anspruch 1, wobei das erste Bindemittel und das zweite Bindemittel jeweils unabhängig voneinander mindestens eines umfassen, das aus der Gruppe ausgewählt ist, bestehend aus Polyvinylidenfluorid, Styrol-Butadien-Kautschuk, Acrylnitril-Butadien-Kautschuk, Acrylkautschuk, Butylkautschuk, Fluorkautschuk, Polyvinylalkohol, Polyacrylsäure, Polyethylenglykol, Polyacrylnitril und Polyacrylamid.

8. Negative Elektrode (10) nach Anspruch 1, wobei das erste Bindemittel und das zweite Bindemittel einen Styrol-Butadien-Kautschuk umfassen.

9. Negative Elektrode (10) nach Anspruch 1, wobei ein Verhältnis einer Dicke der ersten aktiven Materialschicht (210) der negativen Elektrode zu einer Dicke der zweiten aktiven Materialschicht (220) der negativen Elektrode in einem Bereich von 1:0,5 bis 1:2 liegt.

10. Negative Elektrode (10) nach Anspruch 1, wobei eine Summe aus einer Beladungsmenge der ersten aktiven Materialschicht (210) der negativen Elektrode und einer Beladungsmenge der zweiten aktiven Materialschicht (220) der negativen Elektrode in einem Bereich von 4 $mAh/cm^2$ bis 8 $mAh/cm^2$ liegt.

11. Sekundärbatterie, umfassend:

    die negative Elektrode (10) nach Anspruch 1;
    eine der negativen Elektrode (10) gegenüberliegende positive Elektrode;
    einen zwischen der negativen Elektrode (10) und der positiven Elektrode angeordneten Separator; und
    einen Elektrolyten.

12. Sekundärbatterie nach Anspruch 11, wobei die positive Elektrode einen Stromkollektor der positiven Elektrode und eine auf dem Stromkollektor der positiven Elektrode angeordnete aktive Materialschicht der positiven Elektrode umfasst,
    wobei die aktive Materialschicht der positiven Elektrode ein aktives Material der positiven Elektrode umfasst, das ein Oxid auf Lithium-Kobalt-Basis einschließt.

## Revendications

1. Électrode négative (10) comprenant :

    un collecteur de courant d'électrode négative ;
    une première couche de matériau actif d'électrode négative (210) disposée sur le collecteur de courant d'électrode négative (100) et incluant un premier matériau actif à base de carbone, un premier matériau actif à base de silicium, et un premier liant ; et
    une deuxième couche de matériau actif d'électrode négative (220) disposée sur la première couche de matériau actif d'électrode négative (210) et incluant un deuxième matériau actif à base de carbone, un deuxième matériau actif à base de silicium, et un deuxième liant,
    dans laquelle le premier matériau actif à base de silicium comprend un premier composé à base de silicium représenté par $SiO_x$ ($0 \leq x < 2$) et un premier métal dopé dans le premier composé à base de silicium, et
    le deuxième matériau actif à base de silicium comprend un deuxième composé à base de silicium représenté par $SiO_y$ ($0 \leq y < 2$) et un deuxième métal dopé dans le deuxième composé à base de silicium,
    dans laquelle un rapport en poids du premier métal sur la base d'un poids total du premier composé à base de silicium et du premier métal est supérieur à un rapport en poids du deuxième métal sur la base d'un poids total du deuxième composé à base de silicium et du deuxième métal, et
    un rapport d'un pourcentage en poids du premier liant sur la base d'un poids de la première couche de matériau actif d'électrode négative (210) à un pourcentage en poids du deuxième liant sur la base d'un poids de la deuxième couche de matériau actif d'électrode négative (220) s'inscrit dans une plage de 0,9:1 à 5,5:1,
    dans laquelle un poids du premier métal s'inscrit dans une plage de 10 % en poids à 25 % en poids sur la base du poids total du premier composé à base de silicium et du premier métal, et
    un poids du deuxième métal s'inscrit dans une plage de 3 % en poids ou plus à moins de 10 % en poids sur la base

du poids total du deuxième composé à base de silicium et du deuxième métal,
dans laquelle le premier métal et le deuxième métal comprennent chacun indépendamment au moins un métal choisi dans le groupe constitué de lithium (Li), magnésium (Mg), calcium (Ca), et aluminium (Al).

**2.** Électrode négative (10) selon la revendication 1, dans laquelle le premier matériau actif à base de carbone et le premier matériau actif à base de silicium sont inclus en une quantité de 90 % en poids à 99 % en poids dans la première couche de matériau actif d'électrode négative (210), et
un rapport en poids du premier matériau actif à base de carbone au premier matériau actif à base de silicium s'inscrit dans une plage de 85:15 à 99:1.

**3.** Électrode négative (10) selon la revendication 1, dans laquelle le deuxième matériau actif à base de carbone et le deuxième matériau actif à base de silicium sont inclus en une quantité de 90 % en poids à 99 % en poids dans la deuxième couche de matériau actif d'électrode négative (220), et
un rapport en poids du deuxième matériau actif à base de carbone au deuxième matériau actif à base de silicium s'inscrit dans une plage de 85:15 à 99:1.

**4.** Électrode négative (10) selon la revendication 1, dans laquelle le premier liant est inclus en une quantité de 1 % en poids à 15 % en poids dans la première couche de matériau actif d'électrode négative (210).

**5.** Électrode négative (10) selon la revendication 1, dans laquelle le deuxième liant est inclus en une quantité de 1 % en poids à 15 % en poids dans la deuxième couche de matériau actif d'électrode négative (220).

**6.** Électrode négative (10) selon la revendication 1, dans laquelle un poids total du premier liant et du deuxième liant s'inscrit dans une plage de 1 % en poids à 15 % en poids sur la base d'un poids total de la première couche de matériau actif d'électrode négative (210) et de la deuxième couche de matériau actif d'électrode négative (220).

**7.** Électrode négative (10) selon la revendication 1, dans laquelle le premier liant et le deuxième liant comprennent chacun indépendamment au moins un élément choisi dans le groupe constitué de fluorure de polyvinylidène, caoutchouc styrène-butadiène, caoutchouc acrylonitrile-butadiène, caoutchouc acrylique, caoutchouc butyle, caoutchouc fluoré, alcool polyvinylique, acide polyacrylique, polyéthylène glycol, polyacrylonitrile, et polyacrylamide.

**8.** Électrode négative (10) selon la revendication 1, dans laquelle le premier liant et le deuxième liant comprennent un caoutchouc styrène-butadiène.

**9.** Électrode négative (10) selon la revendication 1, dans laquelle un rapport d'une épaisseur de la première couche de matériau actif d'électrode négative (210) à une épaisseur de la deuxième couche de matériau actif d'électrode négative (220) s'inscrit dans une plage de 1:0,5 à 1:2.

**10.** Électrode négative (10) selon la revendication 1, dans laquelle une somme de la capacité surfacique de la première couche de matériau actif d'électrode négative (210) et de la capacité surfacique de la deuxième couche de matériau actif d'électrode négative (220) s'inscrit dans une plage de 4 $mAh/cm^2$ à 8 $mAh/cm^2$.

**11.** Batterie secondaire comprenant :

l'électrode négative (10) selon la revendication 1 ;
une électrode positive faisant face à l'électrode négative (10) ;
un séparateur disposé entre l'électrode négative (10) et l'électrode positive ; et
un électrolyte.

**12.** Batterie secondaire selon la revendication 11, dans laquelle l'électrode positive comprend un collecteur de courant d'électrode positive ; et une couche de matériau actif d'électrode positive disposée sur le collecteur de courant d'électrode positive,
dans laquelle la couche de matériau actif d'électrode positive comprend un matériau actif d'électrode positive incluant un oxyde à base de lithium-cobalt.

[FIG. 1]

10
220
210
100

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020210157520
- KR 1020170074030
- KR 1020050087148
- CN 111628141 A